(19) Europäisches Patentamt / European Patent Office / Office européen des brevets

(11) **EP 2 952 888 B1**

(12) **FASCICULE DE BREVET EUROPEEN**

(45) Date de publication et mention de la délivrance du brevet:
**01.08.2018 Bulletin 2018/31**

(51) Int Cl.:
***G01N 27/447*** (2006.01)   ***C12Q 1/68*** (2018.01)

(21) Numéro de dépôt: **15170870.8**

(22) Date de dépôt: **05.06.2015**

(54) **MARQUEUR DE TAILLE ET PROCEDE POUR LE CONTRÔLE DE LA RESOLUTION D'UN ELECTROPHOREGRAMME**

GRÖSSENMARKIERER UND VERFAHREN ZUR STEUERUNG DER AUFLÖSUNG EINES ELEKTROPHEROGRAMMS

SIZE MARKER AND METHOD FOR CONTROLLING THE RESOLUTION OF AN ELECTROPHEROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.06.2014 FR 1455188**

(43) Date de publication de la demande:
**09.12.2015 Bulletin 2015/50**

(73) Titulaire: **Idemia Identity & Security France 92130 Issy-les-Moulineaux (FR)**

(72) Inventeurs:
 • **Tonson, Benoit**
   **92130 Issy-les-Moulineaux (FR)**
 • **Ragot, Marcelin**
   **92130 Issy-les-Moulineaux (FR)**
 • **Pouet, Marina**
   **92130 Issy-les-Moulineaux (FR)**

(74) Mandataire: **Regimbeau**
   **20, rue de Chazelles**
   **75847 Paris Cedex 17 (FR)**

(56) Documents cités:
   **WO-A1-93/14224     US-A1- 2005 115 837**

• **YINING SHI ET AL: "High-resolution single-stranded DNA analysis on 4.5 cm plastic electrophoretic microchannels", ELECTROPHORESIS, vol. 24, no. 1920, 27 octobre 2003 (2003-10-27), pages 3371-3377, XP055166226, ISSN: 0173-0835, DOI: 10.1002/elps.200305553**
• **YINING SHI: "DNA sequencing and multiplex STR analysis on plastic microfluidic devices", ELECTROPHORESIS, vol. 27, no. 19, 7 septembre 2006 (2006-09-07), - 19 octobre 2006 (2006-10-19), pages 3703-3711, XP055166228, ISSN: 0173-0835, DOI: 10.1002/elps.200600129**
• **KIMPTON P ET AL: "AUTOMATED DNA PROFILING EMPLOYING MULTIPLEX AMPLIFICATION OF SHORT TANDEM REPEAT LOCI", PCR METHODS & APPLICATIONS, COLD SPRING HARBOR LABORATORY PRESS, US, vol. 3, no. 1, 1 August 1993 (1993-08-01), pages 13-22, XP000565542, ISSN: 1054-9803**
• **H-MICHAEL WENZ ET AL: "High-Precision Genotyping by Denaturing Capillary Electrophoresis", PCR METHODS & APPLICATIONS, COLD SPRING HARBOR LABORATORY PRESS, US, vol. 8, 1 January 1998 (1998-01-01), pages 69-80, XP007906916, ISSN: 1054-9803**
• **KLINE M C ET AL: "INTERLABORATORY EVALUATION OF SHORT TANDEM REPEAT TRIPLEX CTT", JOURNAL OF FORENSIC SCIENCES, CALLAGHAN AND CO, CHICAGO, IL, US, vol. 42, no. 5, 1 September 1997 (1997-09-01), pages 897-906, XP009000093, ISSN: 0022-1198**

## Description

La présente invention concerne le contrôle de la résolution d'un électrophorégramme.

Plus précisément, l'invention propose un marqueur de taille permettant un tel contrôle, ainsi qu'un procédé de contrôle d'un électrophorégramme obtenu au cours d'une analyse par électrophorèse utilisant un tel marqueur.

Elle trouve avantageusement - mais non limitativement - application dans le domaine de l'électrophorèse capillaire.

## Domaine technique général et art antérieur

L'**électrophorèse** est - avec la chromatographie - la principale technique utilisée en biologie moléculaire pour la séparation et la caractérisation des molécules biochimiques. Elle est principalement utilisée pour la séparation des protéines ou des acides nucléiques. Dans un milieu donné, la séparation des particules se fait en fonction de leur charge électrique et, pour des charges identiques, en fonction de leur taille. L'électrophorèse permet de séparer des molécules chargées après leurs déplacements dans un champ de force (électrique).

L'**électrophorèse sur gel** permet de séparer les macromolécules biologiques (par exemple l'ADN) dans un gel constitué d'une matrice de polymère baignant dans un tampon conducteur, auquel un champ électrique est appliqué. Il agit comme un tamis pour séparer les molécules en fonction de leur taille. Deux principaux polymères sont utilisés : l'agarose et le polyacrylamide. On peut faire varier la concentration de polymère par rapport à celle du tampon, ainsi que son taux de réticulation. Plus le polymère est concentré et réticulé, et plus la taille des pores du gel est petite. On peut ainsi ajuster les propriétés du gel à la taille des molécules à analyser.

L'**électrophorèse capillaire** a quant à elle été conçue pour séparer des espèces chimiques à l'intérieur d'un petit tube capillaire rempli d'un polymère et d'un électrolyte . Elle est considérée aujourd'hui comme une méthode de séparation analytique très performante, rapide, quantitative et reproductible. L'intérêt pour cette nouvelle technologie a augmenté de manière significative au cours de ces vingt dernières années, d'autant plus que son automatisation a permis d'améliorer la praticabilité de certaines séparations électrophorétiques souvent laborieuses jusqu'alors. Elle fait donc partie des outils dont un laboratoire analytique moderne a besoin aujourd'hui.

L'électrophorèse capillaire utilise des capillaires étroits (diamètre interne de 10 à 200 $\mu$m) pour réaliser avec une très grande efficacité la séparation électrophorétique de molécules de tailles très variables. Le domaine d'application de cette technologie est très vaste et elle permet d'analyser des macromolécules complexes telles que les protéines et les acides nucléiques ou des solutés de petite taille comme les médicaments organiques, les anions et cations inorganiques. Des voltages très importants (plusieurs dizaines de kV) sont utilisés pour séparer les molécules sur la base de leur différence de rapport charge/taille. L'instrumentation est relativement simple et comporte les éléments principaux suivants : un générateur de haut voltage, deux réservoirs de tampon et un capillaire que traverse un système optique de détection relié à un module d'acquisition des données. L'ensemble de l'instrument est contrôlé par un ordinateur.

L'**électrophorèse capillaire en gel** est une technique particulière d'électrophorèse capillaire utilisée lorsque les différences de mobilités électrophorétiques des espèces à séparer sont faibles. Le gel contenu dans les capillaires trie les molécules selon leur masse moléculaire, ce qui permet de déterminer très précisément les masses moléculaires des polynucléotides et des fragments d'acides nucléiques. Les gels utilisés sont généralement constitués de copolymères acrylamide-bisacrylamide. Leur préparation nécessite un traitement avec un silane difonctionnel qui polymérise *in situ* les monomères à l'intérieur des capillaires. Les gels (ou « matrices ») ainsi formés se greffent à la paroi et sont capables de résister aux écoulements électro-osmotiques. Une autre possibilité consiste à remplir les capillaires de polymères enchevêtrés. Un grand nombre de matrices et de capillaires de taille et de natures différentes sont aujourd'hui commercialisés. Grâce à cette technique, les molécules telles que les acides nucléiques sont séparés sur la base de leur différence de rapport charge/taille. La taille des molécules d'acides nucléiques peut très précisément être déduite de l'étude des signaux (ou « pics ») visibles sur l'électrophorégramme.

Les analyses de l'électrophorégramme peuvent être faites automatiquement (par exemple en utilisant les systèmes : RaphidHIT™ 200, DNA Scan™ ou Rapid DNA analysis™ System) ou en laboratoire avec un analyseur génétique (Analyseur génétiqueABI Prism®, séquenceur megaBACE).

Pour toutes ces raisons, l'électrophorèse capillaire en gel est aujourd'hui largement utilisée pour obtenir des profils ADN permettant de détecter des **variations alléliques** et donc de **différencier les individus** (Butler, J.M., et al (1995) Electrophoresis 16: 974-980). Lorsque l'électrophorèse est utilisée pour détecter des variations alléliques, la résolution d'un éléctrophorégramme doit permettre de séparer des acides nucléiques ayant une différence de taille de seulement une base.

Pour contrôler la fiabilité des résultats obtenus sur un électrophorégramme, il est nécessaire de de disposer d'une méthode permettant d'évaluer avec exactitude sa **résolution** en tout point de celui-ci. L'évaluation de cette résolution donne en effet une information capitale quant à la validité des données obtenues et à la fiabilité de la méthode d'obtention des profils ADN.

Dans le cadre d'analyses automatiques, la résolution de l'électrophorégramme est un indicateur de la qualité de l'analyse et du matériel utilisé (la dérive de ce paramètre pouvant être le signe que des éléments doivent être changés). Dans d'autres circonstances, notamment pour les analyses conventionnelles en laboratoire, la résolution peut également servir à valider la pertinence de la méthode utilisée.

Il existe plusieurs méthodes d'évaluation de la résolution sur un électrophorégramme (Luckey et al; J. Phys. Chem., 1993, 97 (12), pp 3067-3075; Heller Cl. Electrophoresis. 1999 Jul; 20(10):1978-86). Toutefois, il n'existe pas de méthode complètement fiable pour obtenir cette résolution. Les méthodes décrites dans les publications citées ci-dessus sont basées sur les signaux mesurés sur l'électrophorégramme pour chaque échantillon à tester. Or ces signaux sont variables d'un électrophorégramme à l'autre de sorte que la valeur de la résolution ne peut être comparée d'une analyse à l'autre et d'un individu à l'autre. Plus précisément, il n'est pas garanti que la résolution soit calculable (par manque d'information) de manière fiable sur une zone pour laquelle cette donnée à un intérêt. En outre les données sur lesquelles s'appuient ces méthodes sont celles permettant de différencier les individus, elles ne sont pas spécifiques au calcul de résolution.

Par ailleurs, l'évaluation de la résolution de l'électrophorégramme est toujours réalisée *a posteriori.* En cas de doute sur la validité d'un résultat d'électrophorégramme, l'analyse doit être entièrement refaite.

Enfin, les méthodes de l'art antérieur permettent de calculer une valeur de la résolution globale, ce qui est inadapté, dans la mesure où la résolution dépend du nombre de bases et est donc une information locale. Shi et Anderson, Electrophoresis 2003, 24, 3371-3377 divulgue un marqueur de taille pour électrophorèse permettant la résolution d'un allèle au niveau de la paire de bases.

**Présentation générale de l'invention**

Un but général de l'invention est de proposer une solution permettant de contrôler, de façon fiable et objective, la résolution d'un électrophorégramme, sur tout et partie de celui-ci.

Un autre but de l'invention encore est de proposer une solution permettant de suivre en temps réel ou a posteriori l'évolution de la résolution d'un électrophorégramme lors d'une analyse.

Ainsi, selon un premier aspect, l'invention propose un marqueur de taille contenant des couples de molécules dont les tailles sont choisies pour permettre de générer sur l'électrophorégramme une succession de double-pics espacés deux à deux d'une distance supérieure à la distance séparant les deux pics d'un même double-pic, selon la revendication 1. Contrairement à certains marqueurs connus dans l'art antérieur qui utilisent des molécules isolées ayant des tailles régulièrement réparties (par exemple 100 pb, 150 pb, 200 pb, 250 pb, 300 pb, 350 pb, etc.), le marqueur proposé comportent plusieurs couples de molécules dont les tailles sont suffisamment proches (par exemple [60, 61], [80, 81], [100, 101], et [120, 121] pb) pour faire apparaitre sur l'électrophorégramme des double-pics successifs.

En faisant migrer un tel marqueur proposé en même temps que l'échantillon testé, il est possible de contrôler, pendant l'analyse, que la résolution de l'électrophorégramme est suffisante pour faire apparaitre ces double-pics : dès lors que les double-pics y apparaissent de façon suffisamment marquée, cela signifie que la résolution de l'électrophorégramme est, dans la zone des double-pics, supérieure à la différence de taille entre deux molécules d'un même couple.

Les molécules du marqueur peuvent être notamment des molécules d'ADN (simple ou double brin), d'ARN, des polypeptides, des protéines, des médicaments organiques, des anions et des cations inorganiques, etc...

Notamment, les double-pics peuvent être obtenus en utilisant un mélange de plusieurs couples de molécules d'ADN, la taille des molécules d'ADN au sein de chaque couple différant d'une paire de base. En effet, deux molécules d'ADN dont la taille ne diffère que d'une paire de base (i.e., deux molécules d'ADN contenant x paires de bases et x+1 paires de base respectivement) génèrent sur l'électrophorégramme deux pics très proches, séparés par une « vallée » (un tel motif sera ci-après dénommé « double-pic »). Dans ce cas précis, pour que la résolution en une zone de l'électrophorégramme soit inférieure à une base, il suffit que la différence de hauteur entre le plus bas des deux pics et le creux entre les deux pics soit différentiable du bruit.

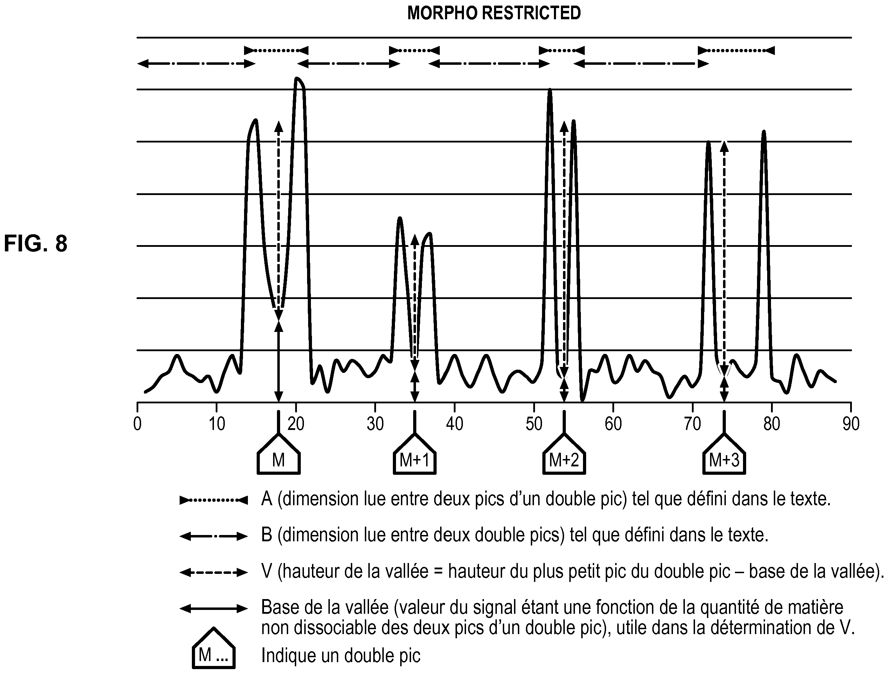

Par « vallée », on entend, au sens de la présente invention, la région de l'électrophorégramme séparant les deux maxima d'un double-pic. La hauteur V d'une vallée est égale à la hauteur du pic le moins élevé de son double-pic, moins la hauteur de la base de la vallée (cf. figure 8).

La hauteur de la base de la vallée est par exemple déterminée comme étant :

- La hauteur du point minimum de la vallée, lorsqu'un seul point de changement de pente existe entre les deux pics, (point minimum où la pente de l'électrophorégramme passe de négatif à positif entre les deux pics) ;
- ou, lorsque plusieurs points de changement de pente existent entre les deux pics, la hauteur maximale de l'électrophorégramme entre les points de changement de pente où la pente de l'électrophorégramme passe de négatif à positif.

Le marqueur de taille proposé comporte avantageusement au moins trois couples de molécules pour la génération d'une succession de double-pics sur un électrophorégramme.

Les molécules contenues dans ce marqueur sont fonction i) de la nature des composés d'intérêt à tester, ii) de leur taille iii) du système d'électrophorèse utilisé, et iv) de la résolution souhaitée autour du pic attendu pour le composé d'intérêt.

En outre, la différence de taille (« b ») entre des couples de molécules présents dans ledit marqueur et qui correspondent à des double-pics successifs est supérieure au double de la différence de taille (« a ») entre deux molécules d'un même couple (b>2a).

Dans un mode de réalisation préféré, la différence de taille (« a ») entre deux molécules d'un même couple est comprise entre 1 et 6 unités de taille.

Dans un autre mode de réalisation préféré, ces molécules sont de l'ADN simple brin et la différence de taille (« a ») entre deux molécules d'un même couple vaut 1 paire de bases, tandis que « b » vaut entre 20 et 60 paires de base, de préférence vaut 32 paires de bases.

Selon un autre aspect encore de l'invention, il est proposé un procédé de contrôle de la résolution d'un électrophorégramme, caractérisé en ce que (i) on fait migrer un marqueur du type précité dans un capillaire, et (ii) on traite un signal correspondant audit électrophorégramme et/ou des données qui lui correspondent pour détecter la présence des double-pics correspondant aux couples de molécules dudit marqueur. Dans un mode de mise en oeuvre possible, pour détecter la présence d'un double-pic, on met en oeuvre un traitement de comparaison par lequel on compare à un seuil le rapport entre

- la différence de hauteur entre le plus petit pic d'un double-pic et la vallée de ce double-pic et
- trois fois la valeur de l'écart-type ($\sigma$) de la hauteur des vallées allant du double-pic précédent au double-pic suivant.

Notamment, la courbe de ce rapport peut être présentée superposée à un électrophorégramme qui lui correspond.

En variante, pour détecter la présence d'un double-pic, on détecte les changements de pente du signal d'électrophoréghramme et l'on détecte que sa pente devient négative après un premier maximum, passe par zéro puis redevient positive pour atteindre un second maximum.

En variante encore, pour détecter la présence d'un double-pic, on met en oeuvre un traitement de comparaison par lequel on compare à un seuil le rapport entre la hauteur de la vallée entre deux pics et la hauteur du plus petit des deux pics.

Comme on l'aura compris, la solution proposée présente de nombreux avantages.

Elle permet notamment de contrôler tout au long de l'analyse d'un échantillon et en tout point de l'électrophorégramme la résolution de celui-ci, afin de détecter le plus tôt possible si l'analyse sera exploitable ou si des éléments du système doivent être changés. En d'autres termes, elle permet de vérifier pendant la phase d'électrophorèse la résolution de la zone d'analyse courante (et éventuellement d'exclure des portions d'électrophorégramme dont la résolution serait insuffisante, ou d'arrêter l'analyse en cas de résolution aberrante). Elle permet en outre de vérifier la dérive de la résolution dans le temps afin de contrôler la vétusté/fatigue/validité de la machine ainsi que celle du capillaire.

Grâce à cette méthode, un expert peut donc vérifier facilement la fiabilité d'une zone de l'électrophorégramme *via* sa résolution locale, y compris pendant le traitement des données. Il pourra par exemple rapidement déterminer si la résolution obtenue est compatible avec les exigences de la détection des variations alléliques (détection d'une paire de base de différence).

En outre, la solution proposée est d'application générique :

- elle peut être utilisée pour caractériser la qualité d'un électrophorégramme obtenu avec tout type d'instruments permettant l'obtention de profils d'ADN (RaphidHIT™200, DNA Scan™ Rapid DNA analysis™ System, Analyseur génétique 3100 ABI Prism®, séquenceur megaBACE, etc.),
- elle fonctionne pour tout type d'électrophorèse capillaire avec des molécules d'ADN (simple ou double brin), d'ARN, des polypeptides, des protéines, des médicaments organiques, des anions et des cations inorganiques ou toutes les molécules pouvant être séparées sur la base de leur différence de rapport charge/taille,
- elle peut être utilisée avec tout type de détecteurs associés à l'électrophorèse capillaire (Photomètre UV-visible, Réfractomètre, Détecteur fluorimétrique, Détecteur électrochimique, Conductimètre, Détecteur par diffusion de lumière, Spectroscopie de masse),
- elle est compatible avec les différentes transformations chimiques (ajout de fluorochromes, etc.) nécessaires à la détection des molécules par les détecteurs précédemment cités.

La solution proposée est facile à mettre en oeuvre. D'une part, les marqueurs de taille qui y sont utilisés sont des produits chimiques dont la production est maîtrisée et peu couteuse. D'autre part, la mise en oeuvre en vue d'un traitement *a posteriori* peut être faite par l'ajout d'une fonctionnalité dans les logiciels mis à la disposition des experts. Enfin, sa mise en oeuvre dans un processus automatique suppose simplement l'ajout, dans le programme de la machine, d'un algorithme de traitement pour la détection des double-pics du marqueur de taille.

Selon un autre aspect encore, il est proposé un procédé d'électrophorèse, dans lequel on soumet un échantillon à tester à une migration par électrophorèse au cours de laquelle au moins un détecteur génère un signal d'électrophorégramme, caractérisé en ce que

- au moins un échantillon que l'on soumet à une migration par électrophorèse contient un marqueur de taille du type précité,

- on traite le signal d'électrophorégramme et/ou des données qui lui correspondent pour détecter la présence des double-pics correspondant aux couples de molécules dudit marqueur, et
- on contrôle la résolution dans la zone de l'électrophorégramme correspondant à chaque composé d'intérêt susceptible d'être détecté dans l'échantillon.

Notamment, dans le cadre d'un procédé d'électrophorèse capillaire, on vérifie par exemple si la détection des double-pics correspondant aux couples de molécules dudit marqueur est ou non satisfaisante et on change un capillaire en fonction du résultat de cette vérification ou de vérifications antérieures.

Le traitement du signal d'électrophorégramme et/ou des données qui lui correspondent pour détecter la présence des double-pics correspondant aux couples de molécules dudit marqueur est mis en oeuvre en temps réel ou a posteriori.

La solution proposée est ainsi avantageusement utilisée pour la détection des variations alléliques entre individus dans le cadre d'une analyse forensique.

**Description des figures**

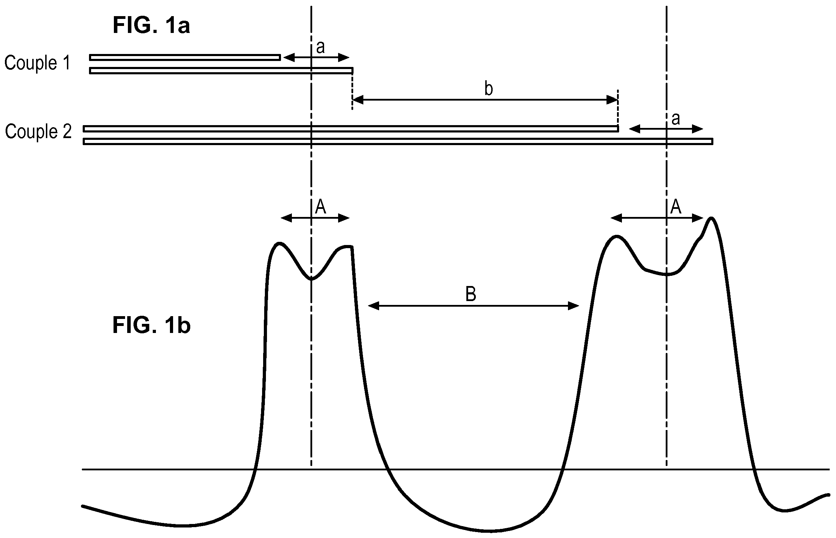

Les **figures 1a et 1b** illustrent un exemple de profil d'électrophorégramme (figure 1b) obtenu avec un marqueur de taille contenant deux couples de molécules (figure la) adaptés pour générer des double-pics sur un électrophorégramme.

La **figure 2** illustre un exemple d'électrophorégramme obtenu pour un marqueur de l'invention, lorsque « a » vaut 1 base et « b » vaut 10 bases.

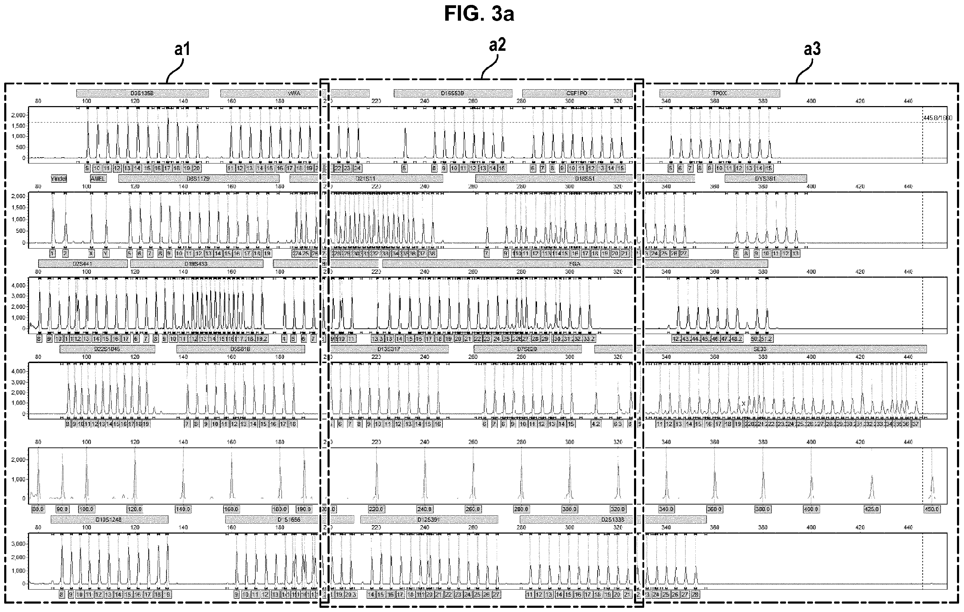

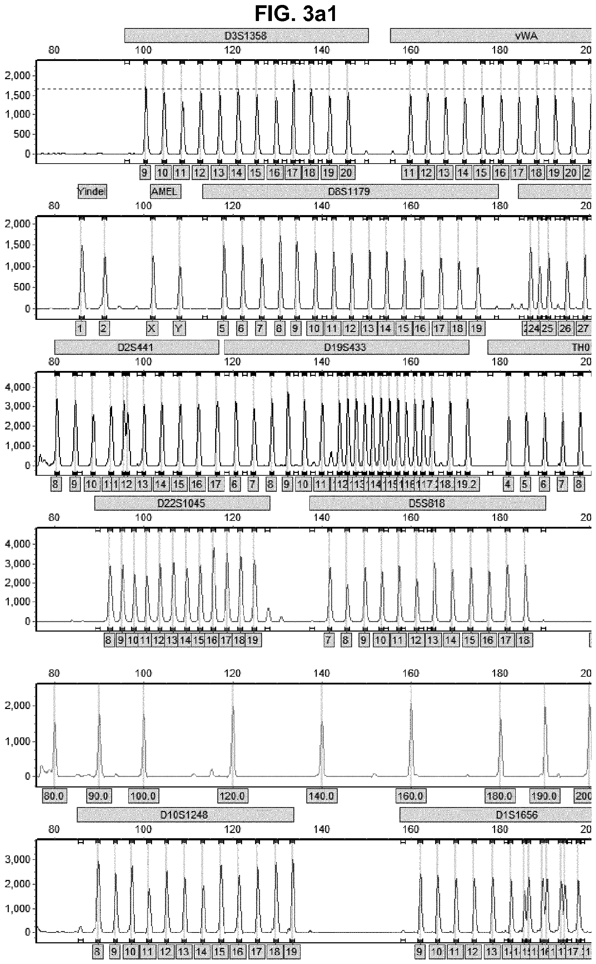

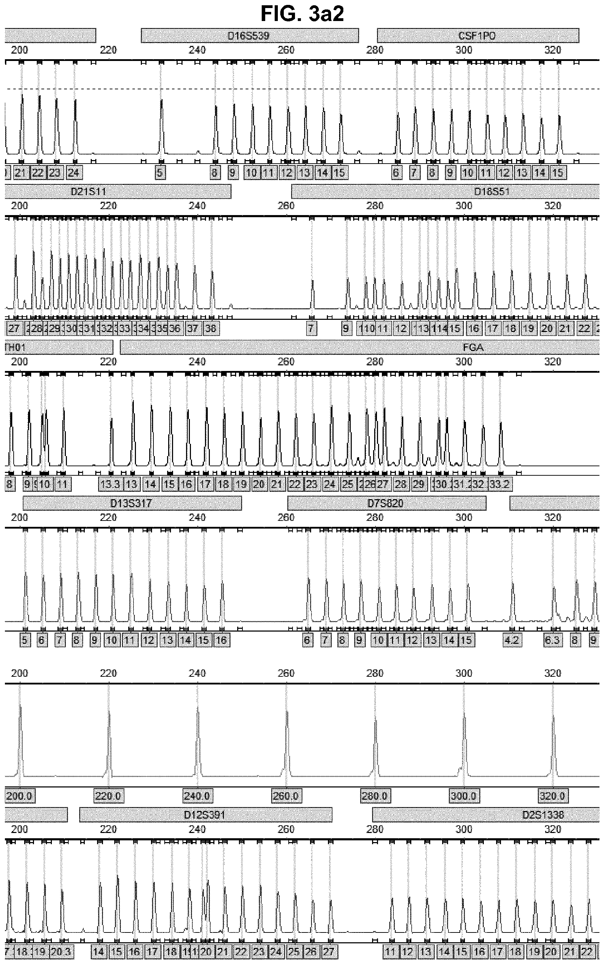

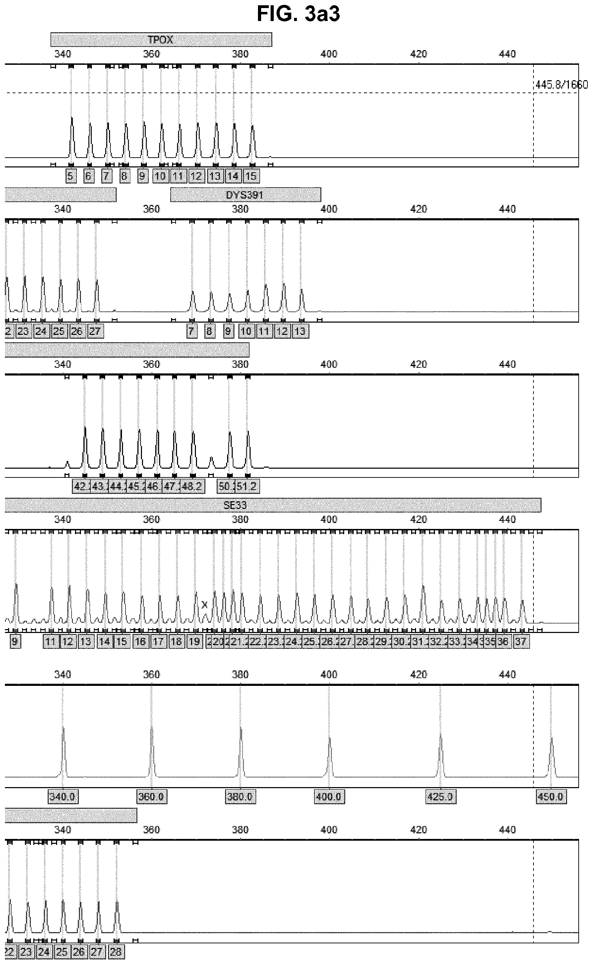

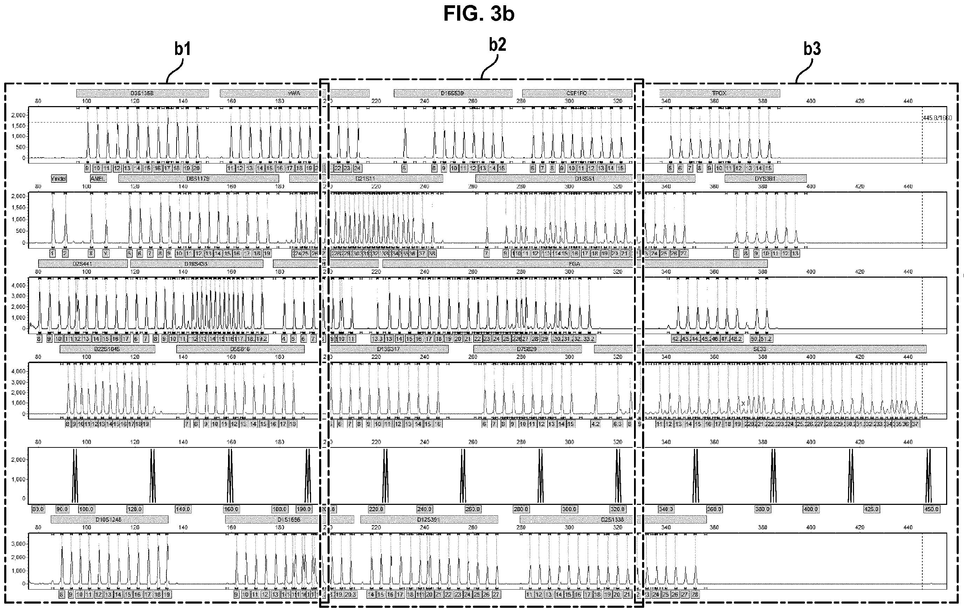

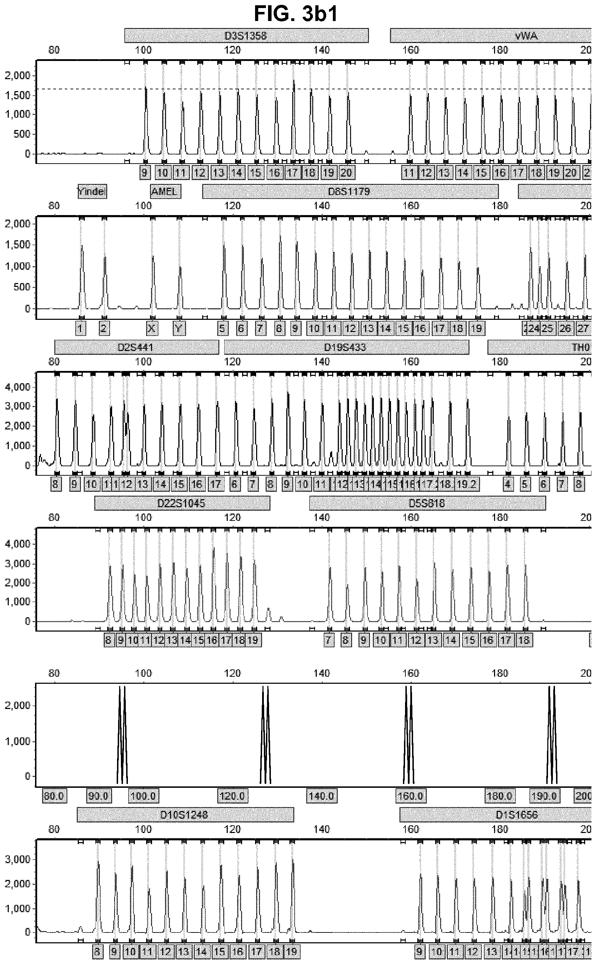

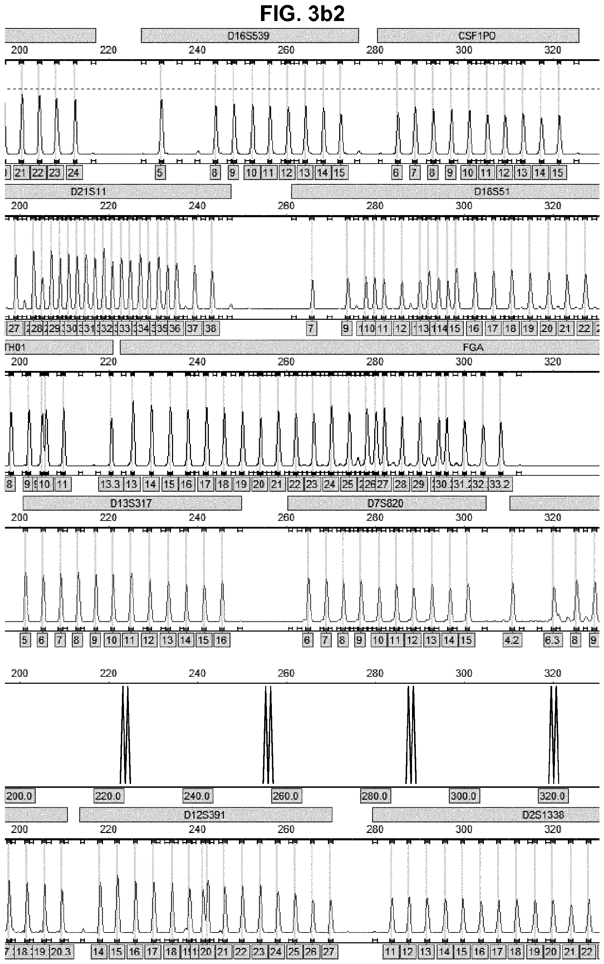

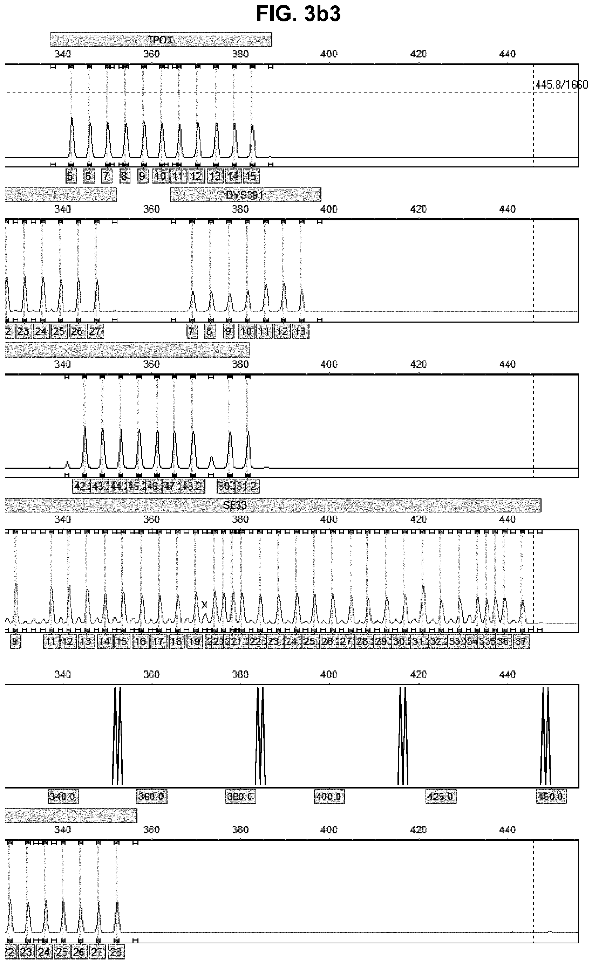

Les **figures 3a et 3b** illustrent un exemple d'ensemble de locus et d'allèles que l'on cherche à détecter dans le cadre d'une analyse forensique. L'avant-dernière ligne sur 3a correspond à un marqueur de taille classiquement utilisé dans l'art antérieur (« LIZ-labeled GS600 DNA sizing »), qui ne permet pas de contrôle de résolution. L'avant-dernière ligne sur 3b correspond à un marqueur de taille selon l'invention qui permet le contrôle de résolution. Pour faciliter leur lecture, les figures 3a et 3b sont présentées agrandies sur les figures 3a1, 3a2, 3a3 et 3b1, 3b2, 3b3 respectivement. Les zones agrandies sont indiquées sur les figures 3a et 3b, qui donnent une vision d'ensemble des spectres obtenus.

La **figure 4a** illustre un logigramme de décision de la qualité d'un capillaire d'électrophorèse grâce à la méthode de l'invention.

La **figure 4b** illustre un logigramme de décision de la qualité d'un double pic d'un électrophorégramme donné.

Les **figures 5a et 5b** illustrent d'une part un électrophorégramme théoriquement attendu pour un marqueur conforme à un mode de réalisation possible et d'autre part un électrophorégramme typiquement obtenu.

Les **figures 6 et 7** illustrent des exemples de contrôle de la qualité d'un capillaire d'électrophorèse en utilisant un contrôle de résolution conforme à un mode de mise en oeuvre de l'invention. La figure 6 illustre la superposition de la courbe de qualité de la résolution de l'éléctrophorégramme et d'un éléctrophorégramme (en l'occurrence, ici, celui du composé comportant les double-pics). La courbe de qualité suivant les valeurs Q est obtenue selon la méthode de l'invention.

La figure 7 illustre la méthode de détection des double-pics considérant la valeur H par rapport à un seuil, comme décrit dans l'invention. V étant la hauteur de la vallée à considérer pour la comparaison au bruit du signal quant à l'estimation de la qualité de la résolution comme décrit dans l'invention.

La **figure 8** illustre différentes situations dans lesquelles un double-pic selon l'invention peut être identifié. Les paramètres A, B, V et la base de la vallée y sont explicités. Plus précisément, le double-pic M montre une base de la vallée au-dessus du niveau du bruit (les pics du double-pic ont leurs bases confondues sur la vallée). Le signal de l'électrophorégramme (fonction de la quantité de matière détectée) indique que la matière constituant les deux pics n'est pas dissociable sur la zone définie comme vallée de ce double-pic, et donc que la résolution se dégrade. Le double-pic M+1 montre une base de la vallée au niveau du bruit. Les signaux des pics du double-pic sont donc dissociables. Le double-pic M+2 montre une base de la vallée en dessous du niveau du bruit. Les signaux des pics du double pic sont largement dissociables. Le double-pic M+3 montre une base de la vallée en dessous du niveau du bruit. La résolution de l'électrophorégramme étant supérieure à celle attendue, la vallée est large, de sorte qu'il est possible de distinguer le bruit entre les deux pics. La base de la vallée est alors le minimum lu dans la vallée (pour la détermination de V).

**Description détaillée d'un ou plusieurs modes de réalisation et de mises en oeuvre possibles**

*Molécules du marqueur*

Un exemple de marqueur de taille possible est un marqueur qui contient cinq couples de molécules de tailles proches, par exemple des molécules d'ADN ayant les tailles suivantes: [60, 61], [80, 81], [100, 101], et [120, 121] pb.

D'autres exemples d'ensembles de couples de molécules sont bien entendu possibles, dès lors qu'ils sont choisis pour permettre de faire apparaitre sur un électrophorégramme des double-pics successifs espacés d'une distance supérieure à la distance entre les deux pics générés par les molécules d'un même couple, afin que les double-pics puissent être détectés.

D'une manière générale, le nombre de double-pics doit permettre d'encadrer les valeurs de tailles des molécules à séparer lors de l'électrophorèse. Et ce dans le but d'avoir une résolution locale valide pour tout l'électrophorégramme.

Le marqueur de taille peut bien entendu contenir un nombre de couples molécules différent de cinq. Un nombre de couples de molécules entre cinq et vingt est toutefois préféré.

Les molécules contenues dans un tel marqueur de taille peuvent être des molécules d'ADN (simple ou double brin), d'ARN, des polypeptides, des protéines, des médicaments organiques, des anions et des cations inorganiques. De manière plus générale, toutes les molécules pouvant être séparées sur la base de leur différence de rapport charge/taille pourraient être utilisées. Dans un mode de réalisation préféré, les molécules contenues dans ce marqueur de taille sont des molécules d'ADN (simple ou double brin), des molécules d'ARN, ou des polypeptides. Dans un mode de réalisation particulièrement préféré, les molécules contenues dans ledit marqueur de taille sont des molécules d'ADN (simple ou double brin).

Les molécules du marqueur sont toutefois choisies en fonction des composés que l'on cherche à analyser dans l'électrophorégramme. Notamment, lorsque les composés que l'on cherche à analyser ont une taille attendue dans une certaine zone de l'électrophorégramme, il est préférable d'utiliser un marqueur de taille contenant des molécules qui migreront dans la même zone, et donc ayant une taille similaire.

Les molécules du marqueur sont en outre choisies pour être de même nature que les molécules de l'échantillon que l'on cherche à analyser afin que les pics qui leurs correspondent puissent effectivement servir de repère pour contrôler la résolution.

En effet, la taille des molécules à analyser ne sera pas la même selon que lesdites molécules sont des polynucléotides, des polypeptides, etc. Par exemple, la taille d'un polypeptide, qui est fonction du nombre d'acides aminés qui le composent, s'exprime généralement en kDa. La taille d'un polynucléotide, qui dépend du nombre de paires de bases qui le composent, s'exprime quant à elle en paires de base (pb) pour un ADN double-brin ou en bases (b) pour un ADN simple-brin ou un ARN. Lorsque les couples de molécules du marqueur sont de même nature que les molécules de l'échantillon que l'on cherche à analyser, les double-pics qu'ils génèrent permettent de vérifier que l'électrophorégramme a bien la résolution attendue en unité kDa, paires de base (pb), bases (b), etc. qui correspond aux molécules de l'échantillon.

En outre, comme indiqué ci-dessus, il est important que, au sein de chaque couple de molécules présent dans ledit marqueur, lesdites molécules soient de taille suffisamment proche pour générer des « double-pics » sur un électrophorégramme. En pratique, cela signifie que la taille des deux molécules au sein de chaque couple diffère d'au moins une unité (un acide aminé pour les polypeptides, une paire de base pour les polynucléotides, un monomère pour les polymères, etc.), et que cette différence est détectable sur l'électrophorégramme. Il est à noter que, plus la différence de taille entre les deux molécules de chaque couple est faible, plus il sera possible de garantir une résolution d'électrophorégramme fiable et précise. Une différence trop importante ne permet par contre pas une détection aisée des « double-pics ».

Dans tout le présent texte et ainsi qu'illustré sur les figures la et 1b, on désigne par « a » la différence de taille entre deux molécules d'un même couple et par « A » la distance entre les sommets du double-pic généré par ledit couple. On désigne par « b» la différence de taille séparant les couples de molécules au sein du marqueur étant entendu que la séparation s'entend comme la différence de taille entre la plus longue molécule d'un premier couple et la plus courte molécule du couple suivant (cf. figure la). On désigne par « B » la distance entre le dernier pic d'un premier double-pic et le premier pic du double-pic suivant, séparant les double-pics générés sur l'électrophorégramme par deux couples de molécules successifs (cf. figure la). Comme on l'aura compris, les valeurs de « A » et de « B » sont des valeurs moyennes, les tailles des molécules contribuant à la génération d'un même pic pouvant avoir une certaine répartition entre elles.

*Sur la différence de taille « a » entre les molécules d'un même couple*

La différence de taille « a » d'un couple générant un double-pic dépend de la nature des molécules contenues dans le marqueur. Selon la nature de ces molécules, elle s'exprime en paire(s) de bases, en kDa, en nombre de monomères, etc.. Elle dépend également du système d'électrophorèse utilisé (type d'électrophorèse, température et temps de réaction, gel utilisé, etc.), car s'il est souhaitable que cette différence de taille « a » soit assez faible, il est néanmoins essentiel que, malgré cette faible différence de taille, les signaux correspondant aux deux molécules de chaque couple soient détectables sur l'électrophorégramme.

Elle est en outre choisie en fonction de la résolution souhaitée et donc du domaine technique et du but de l'analyse effectuée.

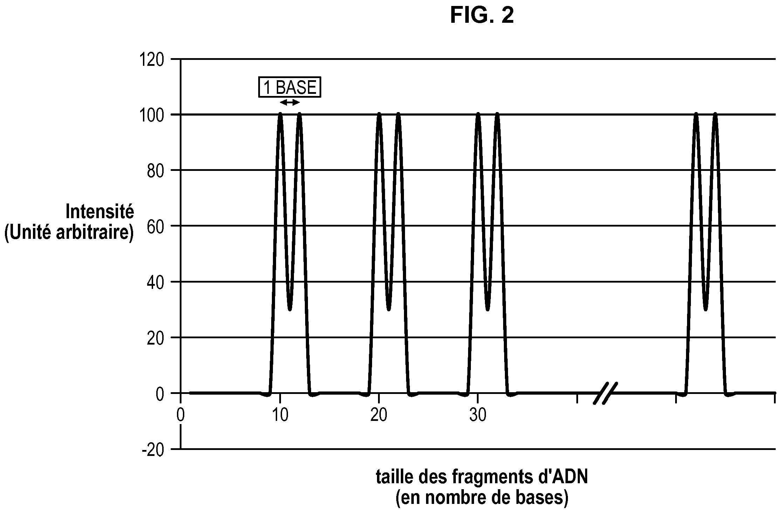

Par exemple, dans le cadre d'une analyse des variations alléliques entre individus (analyse forensique), il est préférable, comme l'illustre la figure 2, d'utiliser des couples de molécules dont la taille diffère d'une paire de base seulement. En effet, la détection d'un double-pic correspondant à deux molécules d'ADN séparées d'une paire de base seulement permet de différencier les allèles 9.3 et 10 du locus TH01 ou tout autre microvariant, quelle que soit sa position dans le profil (voir Figure 3b). Ainsi, dans ce domaine technique particulier, la valeur « a » est identique pour chaque couple de molécules présent dans le marqueur proposé. De préférence, cette valeur est constante et équivaut à 1 pb.

Cependant, pour d'autres applications ne nécessitant pas cette résolution (par exemple pour la séparation de deux séquences d'ADN de taille très différente, ou dont les molécules sont plus difficilement séparables sur un électrophorégramme), il est possible d'utiliser des couples de molécules dont la taille diffère de plus d'une paire de bases (par exemple de deux, de trois, voire de quatre paires de bases).

Il est par ailleurs envisageable, dans certains domaines techniques (par exemple pour séparer des séquences d'ADN dont les tailles sont de 10, 50, 51 et 100 pb), de chercher à obtenir des valeurs de résolution distinctes selon les zones de l'électrophorégramme. Dans ce cas, il sera nécessaire de faire varier l'intervalle « A » entre les pics d'un double pic en utilisant des couples de molécules pour lesquels la valeur « a » n'est pas identique.

De manière générale, il est cependant préférable, pour assurer un calcul de résolution fiable, que la différence de taille entre les deux molécules de chaque couple (« a ») ne dépasse pas les six unités : par exemple, « a » vaut entre 1 et 6 paires de bases pour un échantillon d'ADN double-brin, entre 1 et 6 bases pour un échantillon d'ADN simple-brin ou d'ARN, entre 1 et 6 acides aminés lorsque l'échantillon à étudier contient des protéines ou des polypeptides, entre 1 et 6 monomères lorsque l'échantillon à étudier contient des polymères constitués d'une succession de monomères.

*Sur la différence de taille « b » entre les couples de molécules*

Un autre paramètre important dans le choix des molécules du marqueur est la répartition spatiale des double-pics relatifs aux molécules du marqueur sur l'électrophorégramme.

Lorsque les composés que l'on cherche à analyser ont une taille attendue dans une certaine zone de l'électrophorégramme, il est préférable d'utiliser un marqueur de taille contenant des molécules qui migreront dans la même zone (et donc ayant une taille similaire) et qui généreront sur l'électrophorégramme des double-pics régulièrement espacés. Ceci permet de calculer la résolution précisément dans la zone de l'électrophorégramme où les composés vont être identifiés. Par exemple, si l'échantillon à tester contient des fragments d'ADN d'environ 100 pb, il est préférable d'utiliser un marqueur de taille dont les molécules ont des tailles réparties régulièrement entre 50 et 150 pb, de sorte à pouvoir évaluer la résolution sur l'ensemble de la zone d'intérêt (i.e., autour des pics attendus).

Dans un mode de réalisation particulier, la valeur « b » est identique entre chaque couple de molécules présent dans le marqueur (générant des double-pics régulièrement espacés le long de l'électrophorégramme).

Alternativement, il est possible de faire varier l'intervalle entre chaque double-pic afin d'augmenter ou de réduire au sein d'un même électrophorégramme la densité des informations de résolution selon la zone. La valeur « b » sera alors délibérément différente entre chaque couple de molécules du marqueur, de sorte à générer des double-pics espacés d'une distance variable.

A l'instar de ce qui a été expliqué ci-dessus pour le paramètre « a », la valeur du paramètre « b » (et donc de la distance « B ») dépend du système expérimental utilisé (type d'électrophorèse, conditions de réaction, etc.), ainsi que de la nature et de la taille des composés d'intérêt à tester.

Par exemple, dans le cadre d'une analyse des variations alléliques entre individus (analyse forensique), il est préférable d'utiliser des couples de molécules couvrant efficacement tout l'électrophorégramme (soit environ 600 pb), afin de pouvoir fournir une résolution tout au long de l'électrophorèse. Par ailleurs, dans ce cas particulier, les tailles moyennes de ces couples de molécules doivent différer d'au maximum 60 pb, et ce, afin que les plus petits locus aient au moins une information de résolution (i.e., un double-pic) dans leur largeur. Plus précisément, compte-tenu des locus recommandés pour l'identification des individus (voir Figure 3b pour un exemple), le rapport a :b utilisable dans le cadre d'une analyse forensique est de 1:60 ou supérieur, de préférence de 1:40 ou supérieur, et de manière encore plus préférée de 1 :35 ou supérieur, ces valeurs de a et b restant constantes tout le long de l'électrophorégramme. D'une manière générale, lorsqu'un kit est utilisé, il est important que l'écart « B » entre les double-pics permette d'obtenir une information de résolution pour les plus petits loci dans la zone où leurs variantes sont attendues.

Cependant, il est important, pour que la méthode de l'invention puisse être mise en oeuvre, que des « double-pics » soient effectivement identifiables sur l'électrophorégramme du marqueur de taille de l'invention. Celui-ci ne doit donc pas contenir une série de simples pics, ce qui pourrait être le cas si la distance A était similaire à B. C'est pourquoi la distance B doit être strictement supérieure à A. Selon l'invention, la distance B est strictement supérieure à deux fois la distance A. En d'autres termes, et étant donné que les distances A et B sont proportionnelles aux valeurs des paramètres « a » et « b » respectivement, la valeur « b » est choisie strictement supérieure à deux fois la valeur du paramètre « a » (b>2a).

Dans le cadre de l'analyse forensique, il n'est pas nécessaire d'utiliser des couples de molécules au sein desquels la différence de taille « b » est inférieure à 20 pb.

Ainsi, dans le cadre de cette application particulière, la valeur « b » est par exemple comprise entre 20 et 60 pb. Les molécules du marqueur sont préférentiellement choisies pour que « b » soit égal à 32 pb et ce, afin qu'il soit possible de calculer la résolution au sein des analyses des petits loci D3S1358, D13S317, et TPOX.

Le rapport a : b utilisable dans le cadre d'une analyse forensique est alors de 1:32, les valeurs de 1 pour « a » et de 32 pour « b » restant constantes tout le long de l'électrophérogramme.

Dans le cadre d'autres applications encore, la distance entre chaque double-pic (« B ») peut varier pour être une fonction de la variabilité en taille des molécules recherchées pendant l'électrophorèse. Comme mentionné ci-dessus, cette distance dépend de la nature de l'échantillon à tester et de la taille des composés d'intérêt au sein de cet échantillon.

Les molécules du marqueur de taille sont en outre conjuguées à un marqueur détectable de sorte à pouvoir faire apparaitre les double-pics sur l'électrophérogramme et le cas échéant distinguer les molécules du marqueur des molécules présentes dans l'échantillon à tester. Les molécules du marqueur peuvent par exemple être conjuguées avec des enzymes telles que la péroxydase, la phosphatase alcaline, l'$\alpha$-D-galactosidase, la glucose oxydase, la glucose amylase, l'anhydrase carbonique, l'acétyl-cholinestérase, le lysozyme, la malate déhydrogénase ou la glucose-6 phosphate déhydrogénase, ou avec une molécule comme la biotine, la digoxigénine ou la 5-bromo-désoxyuridine. Des fluorochromes peuvent également être conjugués aux molécules selon l'invention. Ces fluorochromes incluent notamment la fluorescéine et ses dérivés, la rhodamine et ses dérivés, la GFP (GFP pour « Green Fluorescent Protein »), le dansyl, l'umbelliférone, JOE, CXR-ET, Fluorescin, TMR-ET, CC5, 6-FAM™, VIC®, NED™, TAZ™, SID™, LIZ™ etc. D'autres conjugués peuvent inclure également des marqueurs chimioluminescents tels que le luminol et les dioxétanes, des marqueurs bioluminescents tels que la luciférase et la luciférine, ou encore des marqueurs radioactifs tels que l'iodine[123], l'iodine[125], l'iodine[126], l'iodine[133], le bromine[77], le technetium[99m], l'indium[111], l'indium[113m], le gallium[67], le gallium[68], le ruthenium[95], le ruthenium[97], le ruthenium[103], le ruthenium[105], le mercure[107], le mercure[203], le rhenium[99m], le rhenium[101], le rhenium[105], le scandium[47], le tellurium[121m], le tellurium[122m], le tellurium[125m], le thulium[165], le thulium[167], le thulium[168], la fluorine[18], l'yttrium[199], l'iodine[131].

*Exemple d'application au domaine de l'analyse forensique*

Dans le cas d'une analyse de variations alléliques entre les individus, un marqueur de taille contenant 28 couples de molécules d'ADN simple brin ayant des tailles (en nombre de bases) [60, 61], [80, 81], [100, 101], [120, 121], [140, 141], [160, 161], etc. jusqu'à [600,601] a été utilisé.

Il s'agit donc d'un marqueur de taille constitué de molécules associées à d'autres molécules ayant une taille d'une base supplémentaire (voir figure 2).

Les différents locus et allèles d'intérêt sont présentés sur les figures 3a et 3b.

*Procédé d'électrophorèse et mise en oeuvre du contrôle*

Il est possible de faire migrer le marqueur de taille décrit ci-dessus indépendamment de l'échantillon à tester (par exemple, dans un autre capillaire). Dans ce cas, le marqueur sert essentiellement à évaluer la taille des molécules présentes dans l'échantillon à tester (et non la qualité de l'analyse et/ou du capillaire).

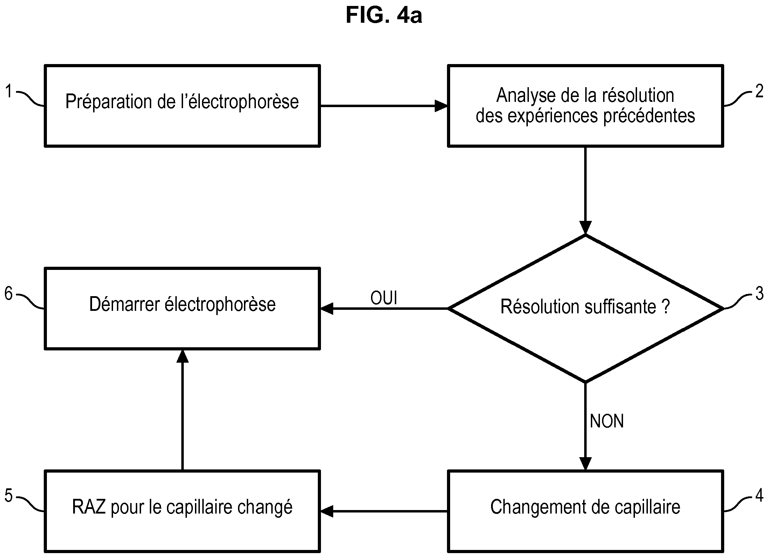

Cependant, dans un mode de réalisation préféré, ledit marqueur et l'échantillon à tester sont amenés à migrer concomitamment dans le même capillaire. Dans cas, préalablement à une nouvelle analyse avec un système d'électrophorèse donné, le marqueur de taille tel que décrit ci-dessus est préparé et mélangé à l'échantillon à tester (étape 1 de la figure 4a).

Lorsqu'elles sont disponibles, les informations sur la résolution des analyses précédemment menées sont vérifiées (étape 2). S'il est déduit de ces informations que la résolution n'est pas satisfaisante (test de l'étape 3), l'opérateur intervient sur le système d'électrophorèse et par exemple, dans le cas d'un système d'électrophorèse capillaire, change le capillaire défaillant (étape 4). Après ce changement, la procédure pour le capillaire changé est remise à zéro et l'électrophorèse est démarrée.

Pendant toute l'analyse par électrophorèse, le signal d'électrophérogramme du marqueur (obtenu en sélectionnant les signaux correspondant au marqueur détectable porté par les molécules dudit marqueur) - ou des données numériques qui correspondent audit marqueur - est analysé, par exemple en temps réel, pour contrôler la résolution dans la zone de chaque composé d'intérêt susceptible d'être détecté dans l'échantillon.

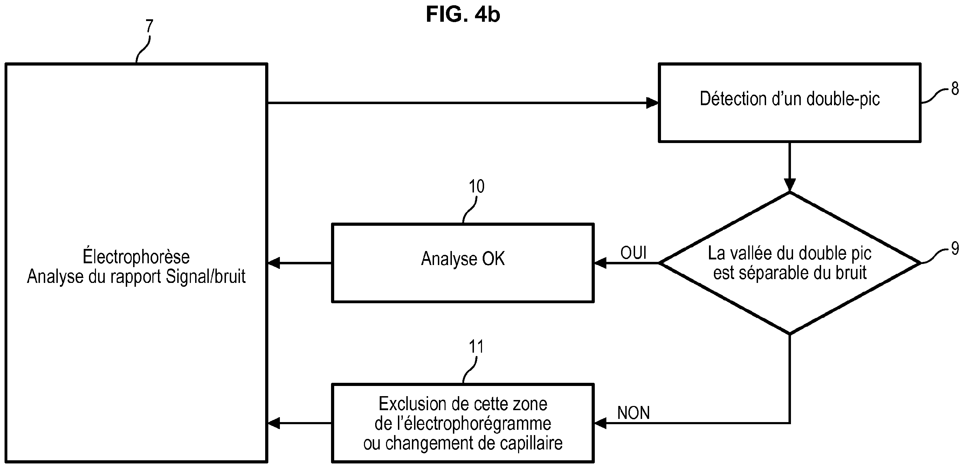

A cet effet, on analyse le rapport signal à bruit sur le signal de l'électrophorégramme ou les données qui lui correspondent (étape 7 sur la figure 4b) et l'on détecte la présence des double-pics correspondant aux couples de molécules du marqueur (étape 8).

On vérifie pour cela que les deux pics correspondant aux molécules du marqueur séparables, i.e., que la différence de hauteur entre le plus bas des deux pics et le creux entre les deux pics est différentiable du bruit (étape 9).

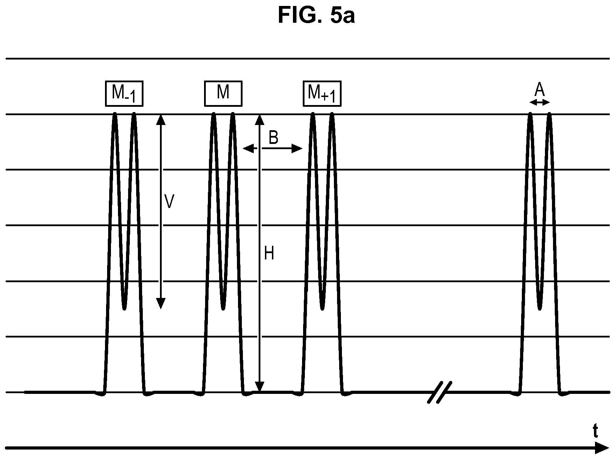

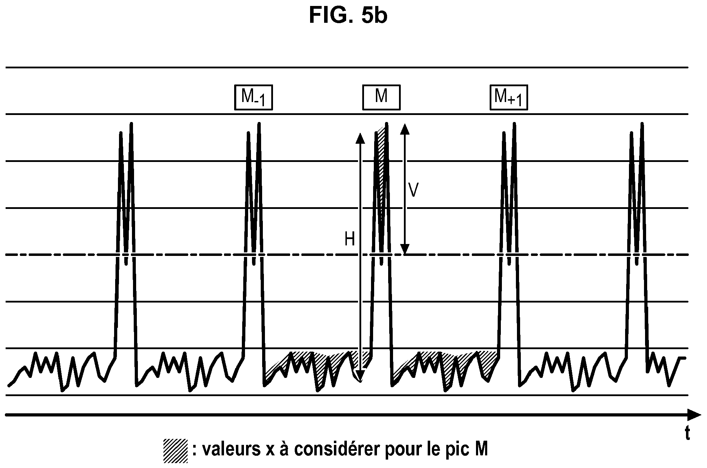

Une façon de procéder consiste à quantifier, sur l'électrophorégramme du marqueur de taille, la hauteur de la vallée séparant les deux pics observés pour les différents couples de molécules (valeur V sur les figures 5a et 5b), et de comparer cette hauteur au bruit.

Lorsqu'un double-pic est détectable et lorsque la vallée du double-pic est séparable du bruit, alors la zone contenant ce double-pic a une résolution meilleure que « a » (typiquement une base dans le cadre de l'analyse forensique). L'analyse a une résolution satisfaisante (étape 10) et peut être poursuivie en mettant en oeuvre les différentes étapes qui viennent d'être décrites.

Dans le cas contraire, i.e., lorsque la vallée d'un double-pic n'est pas séparable du bruit, la zone en question n'a pas une résolution satisfaisante. Dans ce cas, l'électrophorégramme n'est pas assez résolu dans cette zone. L'analyse devra être refaite, par exemple avec un nouveau capillaire. A défaut, la zone correspondante sur l'électrophorégramme devra être exclue pour la suite de celui-ci (étape 11).

Le calcul associé à la résolution « a » se fait ensuite en utilisant des méthodes statistiques faisant appel à des mesures d'écarts-types, ou la méthode mise au point par les inventeurs, qui est décrite dans l'exemple ci-dessous. D'autres méthodes sont par exemple décrites dans Buel E. et al. (J Forensic Sci. 2001 ; 46(2) :341-5).

L'utilisation du marqueur décrit ci-dessus donne une indication fiable de la résolution de l'électrophorégramme au fur et à mesure de l'analyse. Il est ainsi possible de mesurer la dégradation accidentelle ou temporelle de la résolution afin d'anticiper une intervention de maintenance (changement de capillaire, vérification des conditions expérimentales, etc.) en cours d'analyse. Il est également possible de stocker les informations relatives aux résolutions obtenues dans les analyses précédentes afin de prévoir si la qualité des électrophorèses suivantes sera suffisante (l'électrophorèse peut être réalisée) ou non (le capillaire doit par exemple être changé).

*Exemple de traitement pour la détection d'un double pic et le contrôle de la résolution*

On traite l'électrophorégramme pour détecter sur celui-ci l'ensemble des pics d'une hauteur supérieure à un seuil de détection de pics donné, puis en déterminant sur l'ensemble de pics ainsi obtenu, les couples constitués de deux pics successifs apparaissant sur l'électrophorégramme avec une séparation inférieure à un seuil de détection donné. Un test possible pour vérifier sur l'ensemble des couples ainsi obtenus la présence des double-pics consiste à vérifier que la différence V de hauteur entre le plus petit pic d'un double-pic et la vallée de ce double-pic, est supérieure ou égale à 3 fois la valeur de l'écart-type $\sigma$ de la hauteur des vallées allant du double-pic précédent au double-pic suivant.

Si on considère un marqueur de taille contenant au moins trois couples de molécules générant trois dou-ble-pics (notés $M_{-1}$, M et $M_{+1}$ sur les figures 5a et 5b) le test mis en oeuvre sur un électrophorégramme peut être le suivant :

1) Pour le double-pic noté M, calcul de l'écart-type $\sigma$ de la hauteur des vallées allant du double-pic $M_{-1}$ au double-pic $M_{+1}$, cet écart-type valant

$$\sigma = \sqrt{\frac{\sum(x - \bar{x})^2}{n}},$$

avec x = mesure de hauteur de vallée, $\bar{x}$ = la moyenne des mesures de hauteur de vallée et n = le nombre vallées

La hauteur d'une vallée x se calcule sur trois mesures significatives (X, Y, Z) avec Y plus bas que X et Z. La valeur x est égale au plus petit des deux résultats parmi X-Y ou Z-X.

2) Mesure de la différence de hauteur entre le plus petit pic du double-pic M et le bas de la vallée pour ce double-pic M, cette différence étant notée V.

Sur la portion locale considérée, la distribution des hauteurs des vallées suit une loi normale ou équivalente, impliquant que, si $V \geq 3\sigma$, alors la probabilité que la vallée séparant les pics du double-pic soit celle recherchée est de 99.73 %. Il y est associé la même probabilité d'avoir détecté un double-pic, cette vallée caractérisant un double-pic.

3) Comparaison de la valeur V à 3 $\sigma$ (trois fois la valeur de $\sigma$ calculée ci-dessus).

Etant donné que la vallée recherchée sépare deux pics caractéristiques de molécules distinctes de « a » bases, si $V \geq 3\sigma$ alors les deux pics du double-pic sont séparables à « a » base(s) près, impliquant une résolution meilleure que « a ».

L'analyse est alors fiable.

Il est en outre possible de mesurer la fiabilité de la limite supérieure de la résolution par rapport à « a » en calculant la valeur Q suivante sur chaque pic :

$$Q = \frac{V}{3\sigma}.$$

Lorsque V est insuffisant pour détecter la vallée du double-pic (et donc le double-pic) alors Q< 1.

Ainsi, la résolution dans une zone d'un double-pic dont Q<1 est supérieure à « a », cette zone ne doit pas être exploitée.

De cette façon, à chaque double-pic M est associée une valeur Q.

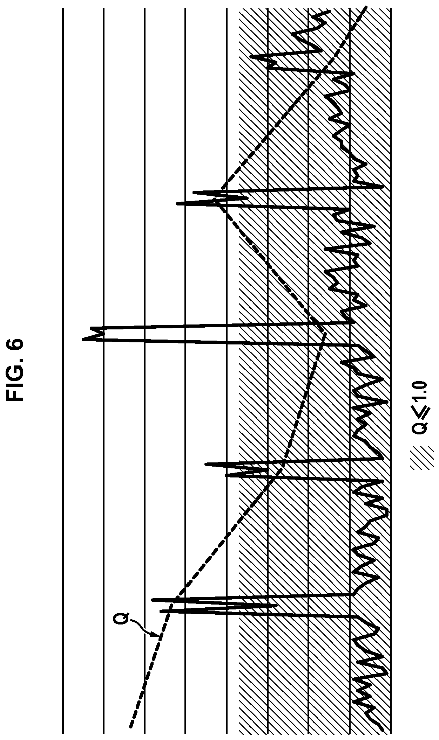

Par interpolation sur les valeurs de Q (régression linéaire, fit curviligne,...), on obtient une courbe de fiabilité (figure 6) qui permet de détecter les zones d'électrophorégramme qui ont une résolution supérieure à « a » et ne doivent pas être exploitées (zones dans lesquelles la courbe de Q passe en-dessous de 1 et où la fiabilité de la résolution est insuffisante).

Cette courbe permet également de juger de l'état d'un capillaire dans le temps en superposant les courbes de Q obtenues à chaque électrophorégramme, par exemple à l'occasion d'un affichage sur un écran.

*Autres exemples de traitement*

Pour toutes les analyses d'électrophorégramme, un calcul de limite de détection est effectué pour séparer le bruit du signal (cf. figure 5b).

Par exemple, dans le cas de fragments d'ADN, cette limite de détection est mesurée pour chaque appareil d'électrophorégramme et chaque kit de PCR. Elle est mesurée pour le fluorochrome marqueur des doubles-pics.

La limite de détection est choisie bien au-dessus du bruit et est par exemple égale à l'écart-type du bruit multiplié par un coefficient qui va couramment de 3 à 10. Seuls les pics en dessus de cette limite de détection sont donc analysés et triés (allèles ou artefacts).

Dans le cas d'un double-pics généré par des molécules séparées par une paire de base, plusieurs méthodes peuvent être utilisées pour détecter la séparation.

Pour détecter la présence d'un double pic, différentes méthodes peuvent alors être utilisées

1) Calcul de dérivés du signal pour détecter les changements de pente du signal : pour un signal de bonne qualité, après la valeur maximum du $1^{er}$ pic, la pente devient négative, puis passe par zéro avant de revenir positive pour atteindre le $2^{nd}$ maximum correspondant au $2^{ème}$ pic.

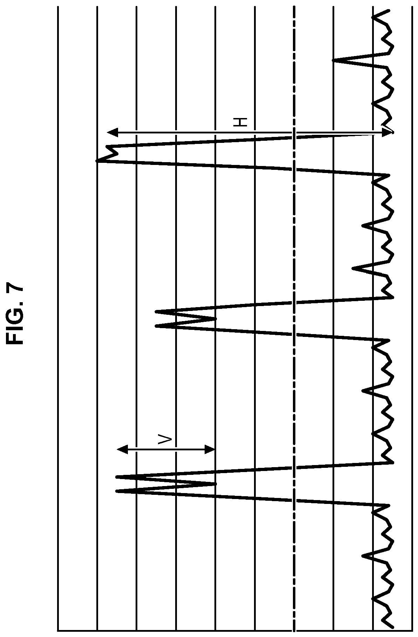

2) Calcul de la hauteur de la vallée (figure 7) entre les deux pics (valeur V) et de la hauteur du plus petit des deux pics (H). On calcule alors le rapport Q= hauteur de la vallée (V) / hauteur du plus petit des deux pics (H). Q = V/H.

Le seuil minimum de ce rapport Q peut être ajusté selon la qualité de départ de l'instrument d'électrophorégramme.

Le rapport Q peut être tracé dans le temps pour mesurer la dégradation potentielle de résolution.

Si ce rapport Q descend en dessous d'un seuil critique ajustable (typiquement un seuil minimum de 10), alors une alerte doit être remontée pour indiquer la perte de résolution et demander une intervention de maintenance de l'appareil.

Les différents traitements qui viennent d'être décrits sont par exemple mis en oeuvre numériquement ou exécutés sur un ordinateur. Le programme de traitement est par exemple téléchargé sur le micro-processeur/ calculateur de la machine d'électrophorèse afin de réaliser une analyse en temps réel. L'analyse peut également être réalisée *a posteriori,* par exemple dans le cadre de contrôle ultérieur des résultats d'une analyse forensique.

**Revendications**

**1.** Marqueur de taille pour électrophorèse, **caractérisé en ce qu'**il contient au moins trois couples de molécules dont les tailles sont choisies pour permettre la génération d'une succession d'au moins trois double-pics sur un même électrophorégramme, lesdits double-pics successifs étant espacés sur l'électrophorégramme d'une distance (« B ») supérieure à la distance (« A ») séparant les deux pics d'un double-pic, la différence de taille (« b ») entre les couples de molécules présents dans ledit marqueur qui génèrent lesdits double-pics successifs étant supérieure au double de la différence de taille (« a ») entre deux molécules d'un même couple (b>2a), ladite différence de taille (« b ») entre les couples de molécules au sein du marqueur s'entendant comme la différence entre la plus longue molécule d'un premier couple et la plus courte molécule du couple suivant.

**2.** Marqueur selon la revendication 1, dans lequel lesdites molécules sont des molécules d'ADN ou d'ARN, et **caractérisé en ce que** la différence de taille (« a ») entre deux molécules d'un même couple est comprise entre 1 et 6 paires de base, de préférence « a » vaut 1 paire de bases.

**3.** Marqueur selon la revendication 1 ou 2, dans lequel lesdites molécules sont des molécules d'ADN ou d'ARN, et **caractérisé en ce que** « b » vaut entre 20 et 60 paires de bases, de préférence « b » vaut 32 paires de bases.

**4.** Marqueur selon la revendication 1, dans lequel lesdites molécules sont des molécules d'ADN simple ou double brin, d'ARN, des polypeptides, des protéines, des médicaments organiques, des anions ou des cations inorganiques.

**5.** Marqueur selon l'une des revendications précédentes, **caractérisé en ce qu'**il comprend des couples de molécules qui génèrent des double-pics en différentes zones de l'électrophorégramme, qui correspondent à des différences de taille « a » distinctes ou constantes.

**6.** Marqueur selon l'une des revendications précédentes, **caractérisé en ce que** la différence de taille (« b ») entre les couples de molécules générant des double-pics successifs est identique sur l'ensemble du marqueur, les double-pics étant régulièrement espacés le long de l'électrophorégramme, ou variable.

**7.** Procédé de contrôle de la résolution d'un électrophorégramme, **caractérisé en ce que** i) on fait migrer le marqueur selon l'une des revendications précédentes dans un capillaire, et ii) on traite le signal

correspondant à l'électrophorégramme généré et/ou des données qui lui correspondent pour détecter la présence des double-pics séparables correspondant aux couples de molécules dudit marqueur.

8. Procédé selon la revendication 7, dans lequel, pour détecter la présence d'un double-pic séparable au cours de l'étape ii), on compare à un seuil le rapport entre :

     - la différence de hauteur entre le plus petit pic d'un double-pic et la vallée de ce double-pic et
     - trois fois la valeur de l'écart-type ($\sigma$) de la hauteur de toutes les vallées du signal de base allant du double-pic précédent au double-pic suivant.

9. Procédé selon la revendication 8, **caractérisé en ce que** la courbe de ce rapport est présentée superposée à un électrophorégramme qui lui correspond.

10. Procédé selon la revendication 7, dans lequel, pour détecter la présence d'un double-pic séparable au cours de l'étape ii), on met en oeuvre un traitement de comparaison par lequel on compare à un seuil le rapport entre la hauteur de la vallée entre deux pics et la hauteur du plus petit des deux pics.

11. Produit programme d'ordinateur adapté pour mettre en oeuvre les étapes du procédé selon l'une des revendications 7 à 10 lorsqu'il est exécuté sur un ordinateur.

12. Procédé d'électrophorèse, dans lequel on soumet un échantillon à tester à une migration par électrophorèse au cours de laquelle au moins un détecteur génère un signal d'électrophorégramme, **caractérisé en ce que** :

     - au moins un échantillon que l'on soumet à une migration par électrophorèse contient un marqueur de taille selon l'une des revendications 1 à 6,
     - on traite le signal d'électrophorégramme et/ou des données qui lui correspondent pour détecter la présence des double-pics séparables correspondant aux couples de molécules dudit marqueur, par exemple selon l'une des revendications 8 et 10, et
     - on contrôle la résolution dans la zone de l'électrophorégramme correspondant à chaque composé d'intérêt susceptible d'être détecté dans l'échantillon.

13. Procédé d'électrophorèse capillaire selon la revendication 12, **caractérisé en ce qu'**on vérifie si la détection des double-pics correspondant aux couples de molécules dudit marqueur est ou non satisfaisante et on change un capillaire en fonction du résultat de cette vérification ou de vérifications antérieures.

14. Procédé d'électrophorèse selon l'une des revendications 12 et 13, **caractérisé en ce que** le traitement du signal d'électrophorégramme et/ou des données qui lui correspondent pour détecter la présence des double-pics séparables correspondant aux couples de molécules dudit marqueur est mis en oeuvre en temps réel ou a posteriori.

**Patentansprüche**

1. Größenmarker für Elektrophorese, **dadurch gekennzeichnet, dass** er mindestens drei Molekülpaare enthält, deren Größen ausgewählt sind, um die Erzeugung einer Abfolge von mindestens drei Doppelspitzen auf einem selben Elektropherogramm zu erlauben, wobei die aufeinanderfolgenden Doppelspitzen auf dem Elektropherogramm in einem Abstand ("B") größer als der Abstand ("A"), der die zwei Spitzen einer Doppelspitze trennt, beabstandet sind, wobei der Größenunterschied ("b") zwischen den in dem Marker vorhandenen Paaren von Molekülen, die die aufeinanderfolgenden Doppelspitzen erzeugen, größer als das Doppelte des Größenunterschieds ("a") zwischen zwei Molekülen eines selben Paares ist (b>2a), wobei sich der Größenunterschied ("b") zwischen den Paaren von Molekülen innerhalb des Markers als der Unterschied zwischen dem längsten Molekül eines ersten Paares und dem kürzesten Molekül des folgenden paares versteht.

2. Marker nach Anspruch 1, wobei die Moleküle DNA- oder RNA-Moleküle sind und **dadurch gekennzeichnet, dass** der Größenunterschied ("a") zwischen zwei Molekülen eines selben Paares zwischen 1 und 6 Basispaaren inklusive beträgt, wobei vorzugsweise "a" 1 Basispaar entspricht.

3. Marker nach Anspruch 1 oder 2, wobei die Moleküle DNA- oder RNA-Moleküle sind und **dadurch gekennzeichnet, dass** "b" zwischen 20 und 60 Basispaaren entspricht, wobei vorzugsweise "b" 32 Basispaaren entspricht.

4. Marker nach Anspruch 1, wobei die Moleküle Ein- oder Doppelstrang-DNA-, RNA-Moleküle, Polypeptide, Proteine, organische Arzneimittel, Anionen oder anorganische Kationen, sind.

5. Marker nach einem der vorangehenden Ansprüche, **dadurch gekennzeichnet, dass** er Molekülpaare umfasst, die Doppelspitzen in verschiedenen Bereichen des Elektropherogramms erzeugen, die unterschiedlichen oder konstanten Größenunterschieden "a" entsprechen.

6. Marker nach einem der vorangehenden Ansprüche, **dadurch gekennzeichnet, dass** der Größenunterschied ("b") zwischen den Paaren von Molekülen, die aufeinanderfolgende Doppelspitzen erzeugen, über den gesamten Marker identisch ist, wobei die Doppelspitzen entlang des Elektropherogramms gleichmäßig oder variabel beabstandet sind.

7. Verfahren zur Überprüfung der Auflösung eines Elektropherogramms, **dadurch gekennzeichnet, dass** i) die Migration des Markers nach einem der vorangehenden Ansprüche in eine Kapillare veranlasst wird, und ii) das Signal verarbeitet wird, das dem erzeugten Elektropherogramm entspricht und/oder Daten, die ihm entsprechen, um das Vorhandensein der separierbaren Doppelspitzen zu ermitteln, die den Paaren von Molekülen des Markers entsprechen.

8. Verfahren nach Anspruch 7, wobei, um das Vorhandensein einer separierbaren Doppelspitze in Schritt ii) festzustellen, verglichen wird, mit einem Grenzwert, das Verhältnis zwischen:

 - dem Höhenunterschied zwischen der kleinsten Spitze einer Doppelspitze und dem Tal dieser Doppelspitze und
 - dem Dreifachen des Wertes der Typenabweichung (σ) der Höhe aller Täler des Basissignals von der vorangehenden Doppelspitze zur nächsten Doppelspitze.

9. Verfahren nach Anspruch 8, **dadurch gekennzeichnet, dass** die Kurve dieses Verhältnisses über einem Elektropherogramm dargestellt wird, das ihr entspricht.

10. Verfahren nach Anspruch 7, wobei, um die Anwesenheit einer in Schritt ii) separierbaren Doppelspitze zu ermitteln, eine Vergleichsverarbeitung durchgeführt wird, mit der das Verhältnis zwischen der Höhe des Tals zwischen zwei Spitzen und der Höhe der kleinsten der zwei Spitzen mit einem Grenzwert verglichen wird.

11. Rechnerprogrammprodukt, das geeignet ist, die Schritte des Verfahrens nach einem der Ansprüche 7 bis 10 umzusetzen, wenn es auf einem Rechner ausgeführt wird.

12. Elektrophoreseverfahren, wobei eine zu testende Probe einer Migration durch Elektrophorese unterzogen wird, bei der mindestens ein Detektor ein Elektropherogrammsignal erzeugt, **dadurch gekennzeichnet, dass**:

 - mindestens eine Probe, die einer Migration durch Elektrophorese unterzogen wird, einen Größenmarker nach einem der Ansprüche 1 bis 6 enthält,
 - das Elektropherogrammsignal und/oder Daten, die ihm entsprechen, verarbeitet werden, um die Anwesenheit der separierbaren Doppelspitzen zu ermitteln, die den Paaren von Molekülen des Markers entsprechen, beispielsweise nach einem der Ansprüche 8 und 10, und
 - die Auflösung in dem Bereich des Elektropherogramms überprüft wird, der jeder interessierenden Verbindung entspricht, die in der Probe ermittelt werden könnte.

13. Kapillar-Elektrophoreseverfahren nach Anspruch 12, **dadurch gekennzeichnet, dass** überprüft wird, ob die Detektion der Doppelspitzen, die den Paaren von Molekülen des Markers entsprechen, zufriedenstellend ist oder nicht, und eine Kapillare in Abhängigkeit vom Ergebnis dieser Überprüfung oder von früheren Überprüfungen ausgetauscht wird.

14. Elektrophoreseverfahren nach einem der Ansprüche 12 und 13, **dadurch gekennzeichnet, dass** die Verarbeitung des Elektropherogrammsignals und/oder der Daten, die ihm entsprechen, um die Anwesenheit der separierbaren Doppelspitzen zu ermitteln, die den Paaren von Molekülen des Markers entsprechen, in Echtzeit oder nachträglich durchgeführt wird.

**Claims**

1. A size marker for electrophoresis, **characterized in that** it contains at least three pairs of molecules the sizes of which are selected to allow the generation of a succession of at least three double-peaks in one same electropherogram, said successive double-peaks being spaced on the electropherogram by a distance ("B") greater than the distance ("A") separating the two peaks of a double-peak, the size difference ("b") between pairs of molecules contained in said marker which generate said successive double-peaks being greater than twice the size difference ("a") between two molecules of one same pair (b>2a), said size difference ("b") between pairs of molecules within the marker being defined as the difference between the longest molecule of a first pair and the shortest molecule of the following pair.

2. The marker according to claim 1, wherein said molecules are molecules of DNA or RNA, and **characterized in that** the size difference ("a") between two molecules of one same pair is comprised between 1 and 6 base pairs, preferably "a" equals 1 base pair.

3. The marker according to claim 1 or 2, wherein said molecules are molecules of DNA or RNA, and **char-**

**acterized in that** "b" is comprised between 20 and 60 base pairs, preferably "b" equals 32 base pairs.

4. The marker according to claim 1, wherein said molecules are molecules of single or double strand DNA, RNA, polypeptides, proteins, organic medicinal products, anions or inorganic cations.

5. The marker according to one of the preceding claims, **characterized in that** it comprises pairs of molecules which generate double-peaks in different regions of the electropherogram, which correspond to different or constant size differences "a".

6. The marker according to one of the preceding claims, **characterized in that** the size difference ("b") between pairs of molecules generating successive double-peaks is identical for the whole marker, the double-peaks being regularly spaced along the electropherogram, or variable.

7. A method for controlling the resolution of an electropherogram, **characterized in that** i) the marker according to one of the preceding claims is caused to migrate in a capillary, and ii) the signal corresponding to the electropherogram generated and/or data corresponding thereto is processed to detect the presence of separable double-peaks corresponding to the pairs of molecules of said marker.

8. The method according to claim 7, wherein, to detect the presence of a separable double-peak during step ii), the ratio between the following is compared with a threshold:

   - the difference in height between the smallest peak of a double-peak and the valley of this double-peak and
   - three times the value of the standard deviation ($\sigma$) of the height of all the valleys of the baseline signal from the preceding double-peak to the following double-peak.

9. The method according to claim 8, **characterized in that** the curve of this ratio is superimposed over a corresponding electropherogram.

10. The method according to claim 7, wherein, to detect the presence of a separable double-peak during step ii), comparative processing is performed whereby the ratio between the height of the valley between two peaks and the height of the smallest of the two peaks is compared with a threshold.

11. A computer programme product adapted to implement the steps of the method according to one of claims 7 to 10 when it is run on a computer.

12. An electrophoresis method, wherein a sample to be analysed is subjected to migration by electrophoresis during which at least one detector generates an electropherogram signal, **characterized in that**:

   - at least one sample subjected to migration by electrophoresis contains a size marker according to one of claims 1 to 6,
   - the electropherogram signal and/or data corresponding thereto are processed to detect the presence of separable double-peaks corresponding to the pairs of molecules of said marker, for example according to one of claims 8 and 10, and
   - the resolution in the region of the electropherogram corresponding to each compound of interest that is to be detected in the sample is controlled.

13. The capillary electrophoresis method according to claim 12, **characterized in that** it is verified whether the detection of the double-peaks corresponding to the pairs of molecules of said marker is or is not satisfactory, and a capillary is changed as a function of the result of this verification or of prior verifications.

14. The electrophoresis method according to one of claims 12 and 13, **characterized in that** the processing of the electropherogram signal and/or of data corresponding thereto to detect the presence of the separable double-peaks corresponding to the pairs of molecules of said marker is performed in real-time or a posteriori.

FIG. 1a

Couple 1

a

Couple 2

b

a

FIG. 1b

A

B

A

FIG. 2

EP 2 952 888 B1

EP 2 952 888 B1

FIG. 3a1

## FIG. 3a2

# FIG. 3a3

# FIG. 3b

## FIG. 3b1

# FIG. 3b2

# FIG. 3b3

FIG. 4a

EP 2 952 888 B1

**FIG. 4b**

```
            7
  ┌──────────────────────┐                              ┌──────────────────────┐
  │                      │─────────────────────────────▶│ Détection d'un        │   8
  │                      │                              │ double-pic            │
  │                      │                              └───────────┬──────────┘
  │                      │                                          │
  │                      │                                          ▼
  │                      │                               10                 ╱╲
  │                      │     ┌──────────────────┐           OUI  ╱        ╲   9
  │ Électrophorèse       │◀────│   Analyse OK     │◀───────────────◀ La vallée du  ╲
  │ Analyse du rapport   │     └──────────────────┘          ╲ double pic est ╱
  │ Signal/bruit         │                                    ╲ séparable du ╱
  │                      │                                     ╲  bruit     ╱
  │                      │                                      ╲    ╱
  │                      │     11                                 │ NON
  │                      │     ┌──────────────────────┐           │
  │                      │◀────│ Exclusion de cette    │◀──────────┘
  │                      │     │ zone de               │
  │                      │     │ l'électrophorégramme  │
  │                      │     │ ou changement de      │
  │                      │     │ capillaire            │
  └──────────────────────┘     └──────────────────────┘
```

FIG. 5a

EP 2 952 888 B1

FIG. 5b

M-1  M  M+1

V

H

▨ : valeurs x à considérer pour le pic M

t

## FIG. 6

Q ≤ 1.0

EP 2 952 888 B1

FIG. 7

# FIG. 8

**MORPHO RESTRICTED**

Legend:

▶ ·········· ◀  A (dimension lue entre deux pics d'un double pic) tel que défini dans le texte.

◀— · —▶  B (dimension lue entre deux double pics) tel que défini dans le texte.

◀— — —▶  V (hauteur de la vallée = hauteur du plus petit pic du double pic – base de la vallée).

◀———▶  Base de la vallée (valeur du signal étant une fonction de la quantité de matière non dissociable des deux pics d'un double pic), utile dans la détermination de V.

M ...  Indique un double pic

EP 2 952 888 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BUTLER, J.M. et al.** *Electrophoresis,* 1995, vol. 16, 974-980
- **LUCKEY et al.** *J. Phys. Chem.,* 1993, vol. 97 (12), 3067-3075
- **HELLER CL.** *Electrophoresis,* Juillet 1999, vol. 20 (10), 1978-86
- **SHI ; ANDERSON.** *Electrophoresis,* 2003, vol. 24, 3371-3377
- **BUEL E. et al.** *J Forensic Sci.,* 2001, vol. 46 (2), 341-5